# EUROPÄISCHE PATENTSCHRIFT

(11) **EP 3 425 422 B1**
(45) Veröffentlichungstag und Bekanntmachung des Hinweises auf die Patenterteilung: **26.01.2022**
(21) Anmeldenummer: 18178739.1
(22) Anmeldetag: 20.06.2018
(51) Int. Cl.: G01S 13/90, G01S 7/40, G01S 7/00

(54) **SYNTHETIK-APERTUR-RADARVERFAHREN UND SYNTHETIK-APERTUR-RADARSYSTEM**
SYNTHETIC APERTURE RADAR METHOD AND SYNTHETIC APERTURE RADAR SYSTEM
PROCÉDÉ DE RADAR À SYNTHÈSE D'OUVERTURE ET SYSTÈME DE RADAR À SYNTHÈSE D'OUVERTURE

(30) Priorität: 03.07.2017 DE 102017211294
(43) Veröffentlichungstag der Anmeldung: 09.01.2019
(73) Patentinhaber: Deutsches Zentrum für Luft- und Raumfahrt e.V., 51147 Köln (DE)
(72) Erfinder: Zonno, Mariantonietta, 81667 München (DE); Rodriguez-Cassola, Marc, 80798 München (DE); Krieger, Gerhard, 82131 Gauting (DE); Moreira, Alberto, 82140 Olching (DE); Lopez-Dekker, Francisco, 2600 AA Delft (NL)
(74) Vertreter: Fink Numrich Patentanwälte PartmbB

(56) Entgegenhaltungen:
- EP-A2- 0 240 449
- DE-C1- 10 101 991
- JP-A- S 628 081
- US-A- 3 624 650
- US-A- 4 163 231
- US-A- 5 826 819
- US-A1- 2004 150 547
- US-A1- 2015 160 337

## Beschreibung

Die Erfindung betrifft ein Synthetik-Apertur-Radarverfahren sowie ein Synthetik-Apertur- Radarsystem.

Synthetik-Apertur-Radarverfahren, welche auch als SAR-Verfahren bezeichnet werden, ermöglichen die Fernerkundung der Erdoberfläche über die Erfassung von an der Erdoberfläche reflektierten Radarpulsen, die von einem Radarsender ausgesendet werden, der sich auf einer Plattform mit konstanter Geschwindigkeit über der Erdoberfläche bewegt. Der Begriff der Erdoberfläche ist dabei weit zu verstehen und kann ggf. auch die Oberfläche eines anderen Himmelskörpers (vorzugsweise eines anderen Planeten) als der Erde umfassen.

Bei SAR-Verfahren macht man sich die Erkenntnis zunutze, dass aufgrund der bewegten Plattform die gleichen Bereiche der Erde bzw. eines Himmelskörpers in unterschiedlichen Positionen erfasst werden, wodurch eine Amplituden- und Phaseninformation und schließlich ein Radarbild der Erdoberfläche erhalten werden kann.

Bei sog. monostatischen SAR-Systemen erfolgt die Erfassung der Radarechos auf der gleichen Plattform wie das Aussenden der Radarechos. Mit anderen Worten wird eine kombinierte Sende- und Empfangseinrichtung sowohl zum Aussenden der Radarsignale als auch zum Empfang der darauf basierenden Radarechos genutzt. Monostatische SAR-Systeme haben den Nachteil, dass zum Zeitpunkt des Aussendens eines Radarsignals kein Radarecho empfangen werden kann, was zu sog. blinden Bereichen (englisch: blind ranges) in den SAR-Radarbildern der Erdoberfläche führt.

Um die Nachteile von monostatischen SAR-Radarsystemen zu vermeiden, sind aus dem Stand der Technik sog. bistatische bzw. multistatische Synthetik-Apertur-Radarsysteme bekannt. Bei solchen Systemen werden die Radarechos von einem oder mehreren Empfängern erfasst, welche sich auf anderen Plattformen als der Sender der Radarsignale befinden, so dass der Empfang der Radarechos unabhängig vom Aussenden der Radarsignale ist und somit nicht die obige Problematik von blinden Bereichen auftritt. Darüber hinaus haben multistatische SAR-Systeme weitere Vorteile. Im Besonderen kann eine Szene gleichzeitig aus unterschiedlichen Winkeln erfasst werden, wodurch spezielle Prozessierungen der erfassten SAR-Rohdaten ermöglicht werden. Beispielsweise kann SAR-Interferometrie durchgeführt werden, um Höhenmodelle der Erdoberfläche zu berechnen bzw. Objektbewegungen auf der Erdoberfläche zu überwachen. Ferner kann SAR-Tomographie durchgeführt werden, um die vertikale Struktur von semitransparenten Volumenstreuern, wie z.B. Vegetation, zu erfassen.

Im Rahmen von SAR-Radarverfahren werden die auszusendenden Signale mit Hilfe eines lokalen Oszillators des Senders von einem Basisfrequenzband in ein vorbestimmtes Frequenzband konvertiert, in dem das SAR-System arbeitet. In herkömmlichen bistatischen bzw. multistatischen SAR-Systemen werden die auf den empfangenen Radarechos beruhenden Signale in den jeweiligen Empfängern wieder in das Basisfrequenzband rückkonvertiert. Die hierdurch erhaltenen SAR-Rohdaten werden anschließend durch den jeweiligen Empfänger zu einer Bodenstation auf der Erdoberfläche übermittelt. Dabei besteht das Problem, dass bei der Rückkonvertierung in das Basisfrequenzband ein lokaler Oszillator im Empfänger und damit ein anderer Oszillator als bei der Generierung der Radarsignale eingesetzt wird. Auf diese Weise kommt es zu unerwünschten Frequenz- und Phasenfehlern.

Um das obige Problem der Frequenz- und Phasenfehler zu umgehen, ist es aus dem Stand der Technik bekannt, eine bidirektionale Übertragungsstrecke (sog. SyncLink) zwischen dem Sender und den Empfängern einzurichten, um Synchronisationsinformationen zur Synchronisation der verschiedenen Oszillatoren zu übermitteln. Die Synchronisationsinformationen werden bei der Verarbeitung der SAR-Rohdaten dazu benutzt, Phasenfehler zwischen den Oszillatoren zu kompensieren. Für die zur Synchronisation vorgesehene Übertragungsstrecke wird zusätzliche Hardware im SAR-System benötigt. Darüber hinaus ist es in bistatischen bzw. multistatischen SAR-Systemen nachteilhaft, dass jeder einzelne Empfänger einen großen Datenspeicher für die SAR-Rohdaten vorhalten muss und ferner über eine leistungsstarke Sendeeinrichtung zur Übertragung der Daten zur Erdoberfläche verfügen muss. Dies erhöht die Komplexität der Empfänger und damit die Kosten.

Die Druckschrift EP 0 240 449 A2 offenbart ein SAR-System mit einem Sender und zwei Empfängern auf mehreren Plattformen, die über eine Halteleine voneinander getrennt sind. Mit dem SAR-System können Stereobilder von der Erdoberfläche gewonnen werden.

In dem Dokument US 4 163 231 A ist ein SAR-Verfahren offenbart, um ein sich bewegendes Objekt an einen gewünschten Punkt auf der Erdoberfläche zu lenken. Der gewünschte Punkt wird bestimmt, indem direkte und indirekte Radarechos vom Boden bzw. über das sich bewegende Objekt korreliert werden.

Das Dokument US 2015/160337 A1 offenbart ein bistatisches SAR-System, bei dem ein analoges Signal von einem Sender oberhalb der Erdoberfläche hin zur Erdoberfläche ausgesendet wird. Das Signal wird von der Erdoberfläche hin zu einem analogen Repeater oberhalb der Erdoberfläche reflektiert, der das analoge Signal zu einem Empfänger auf der Erdoberfläche überträgt, welcher das Signal mit einem Analog-Digital-Wandler in ein digitales Signal konvertiert.

Die Druckschrift DE 101 01 991 C1 beschreibt ein Radarsystem mit synthetischer Apertur durch rotierende Antennen. In dem System werden Evelationsinformationen dadurch gewonnen, dass von einer teleskopartig ausfahrbaren Sendeantenne mit großer Vertikalabmessung die abzubildende Umgebung flächenartig beleuchtet wird.

Die Druckschrift JP S62 8081 A offenbart ein SAR-System, bei dem Radarsignale von einer Radareinrichtung unter Zwischenschaltung eines Repeaters zu einem Ziel gesendet werden. Die am Ziel gestreuten Radarsignale werden wiederum unter Zwischenschaltung des Repeaters zurück zur Radareinrichtung geleitet. Der Repeater führt eine Frequenzkonvertierung der Radarsignale durch.

Aufgabe der Erfindung ist es, ein bistatisches bzw. multistatisches Synthetik-Apertur-Radarverfahren sowie ein entsprechendes SAR-System zu schaffen, bei denen die Datenerfassung weniger aufwändig ist, ohne dabei die Qualität der erfassten Daten zu verschlechtern.

Diese Aufgabe wird durch das Verfahren gemäß Anspruch 1 bzw. das System gemäß Anspruch 16 gelöst. Weiterbildungen der Erfindung sind in den abhängigen Ansprüchen definiert.

In dem erfindungsgemäßen Synthetik-Apertur-Radarverfahren werden von einem oder mehreren Sendern, die sich über die Erdoberfläche bewegen, Radarsignale ausgesendet. Die Radarechos der auf der Erdoberfläche reflektierten Radarsignale werden von einem oder mehreren Empfängern, die sich ebenfalls über die Erdoberfläche bewegen, empfangen. Alle Sender und Empfänger befinden sich dabei auf unterschiedlichen Plattformen oberhalb der Erdoberfläche, d.h. die Bewegungen der Plattformen der Sender und Empfänger sind unabhängig voneinander. Vorzugsweise befinden sich die Sender und Empfänger auf unterschiedlichen Satelliten. Die Bewegungsrichtung der jeweiligen Plattformen wird üblicherweise als Azimut-Richtung bezeichnet. Demgegenüber wird die Höhenrichtung bzw. der entsprechende Höhenwinkel als Elevation und die Richtung senkrecht zu Azimut und Elevation als Range-Richtung bezeichnet. Das erfindungsgemäße SAR-Verfahren ist ein bistatisches Verfahren im Falle von einem Empfänger bzw. ein multistatisches Verfahren im Falle von mehreren Empfängern.

Im Rahmen des erfindungsgemäßen Verfahrens führt ein jeweiliger Sender und ein jeweiliger Empfänger, d.h. jede Kombination aus Sender und Empfänger, sowie eine Signalverarbeitungsplattform oberhalb der Erdoberfläche, d.h. eine Signalverarbeitungseinrichtung auf einer Plattform (insbesondere auf einem Satelliten) oberhalb der Erdoberfläche, die nachfolgend erläuterten Schritte a) bis c) durch.

In einem Schritt a) erzeugt der jeweilige Sender Signale in einem Basisfrequenzband und führt eine erste Frequenzkonvertierung dieser Signale in ein erstes Frequenzband mittels Oszillatorsignalen eines Oszillators des jeweiligen Senders durch, wobei die konvertierten Signale als die Radarsignale ausgesendet werden. Dies entspricht dem herkömmlichen Vorgang der Generierung von Radarsignalen auf Seiten des Senders.

In einem Schritt b) empfängt der jeweilige Empfänger die Radarechos der Radarsignale des jeweiligen Senders und führt eine phasenerhaltende Modulation mittels der empfangenen Radarechos oder mittels prozessierter Radarechos durch. Die phasenerhaltende Modulation zeichnet sich dadurch aus, dass die Phase der empfangenen bzw. prozessierten Radarechos durch die Modulation nicht verschoben wird. Solche phasenerhaltenden Modulationen sind an sich aus dem Stand der Technik bekannt. In einer speziellen Ausführungsform wird hierzu eine Amplitudenmodulation genutzt, wie weiter unten näher beschrieben wird. Ebenso kann hierzu eine Frequenzmodulation oder eine Kombination aus Amplituden- und Frequenzmodulation genutzt werden.

Die mittels der phasenerhaltenden Modulation generierten modulierten Signale werden durch den jeweiligen Empfänger zu der Signalverarbeitungsplattform gesendet, d.h. sie werden zunächst nicht zu einer Bodenstation übermittelt. Sofern die phasenerhaltende Modulation mit prozessierten Radarechos durchgeführt wird, werden diese Radarechos in einer ersten Variante mittels einer Prozessierung ohne darin enthaltene Frequenzkonvertierung erhalten. Mit anderen Worten wird hierdurch vermieden, dass bei der Frequenzkonvertierung empfängerseitige Oszillatorsignale zum Einsatz kommen, welche zu Phasenfehlern führen. In einer zweiten Variante werden die prozessierten Radarechos mit einer Prozessierung erhalten, welche eine oder mehrere zweite Frequenzkonvertierungen in ein zweites Frequenzband umfasst, wobei das zweite Frequenzband vorzugsweise ausschließlich aus Frequenzen besteht, die niedriger als die Frequenzen des ersten Frequenzbands sind. Gegebenenfalls kann das zweite Frequenzband dabei dem Basisfrequenzband entsprechen. Bei dieser Prozessierung wird jede zweite Frequenzkonvertierung durch eine zugeordnete dritte Frequenzkonvertierung in das erste Frequenzband (d.h. eine inverse zweite Frequenzkonvertierung) rückgängig gemacht. Ferner werden die zweite oder zweiten Frequenzkonvertierungen sowie die dritte und dritten Frequenzkonvertierungen mittels Oszillatorsignalen des gleichen Oszillators des jeweiligen Empfängers durchgeführt. Es wird hierdurch erreicht, dass Frequenz- und Phasenfehler, welche durch die Verwendung des empfängerseitigen Oszillators hervorgerufen werden, kompensiert werden, da einer Frequenzkonvertierung immer eine inverse Frequenzkonvertierung mit dem empfängerseitigen Oszillator nachgeschaltet ist.

In einem Schritt c) des erfindungsgemäßen Verfahrens demoduliert die Signalverarbeitungsplattform die empfangenen modulierten Signale und führt eine vierte Frequenzkonvertierung der demodulierten Signale in das Basisfrequenzband (d.h. eine inverse erste Frequenzkonvertierung) mittels Oszillatorsignalen des Oszillators des jeweiligen Senders durch, wodurch SAR-Rohdaten erhalten werden, aus denen die Signalverarbeitungsplattform digitale Daten generiert und abspeichert. In an sich bekannter Weise enthalten die SAR-Rohdaten für eine Vielzahl von Azimut- und Range-Positionen Datenabtastungen in der Form von Amplituden- und Phasenwerten. Vorzugsweise sendet die Signalverarbeitungsplattform die gespeicherten digitalen Daten zu einer Bodenstation auf der Erdoberfläche. Dort können die Daten dann mit an sich bekannten Methoden weiterverarbeitet werden.

Das erfindungsgemäße Verfahren weist den Vorteil auf, dass Übertragungsstrecken zwischen Sendern und Empfängern zum Austausch von Synchronisationsdaten nicht benötigt werden, da eine empfängerseitige Frequenzkonvertierung überhaupt nicht stattfindet bzw. dadurch hervorgerufene Fehler mittels einer zugeordneten inversen Konvertierung kompensiert werden. Durch die Verwendung einer phasenerhaltenden Modulation wird ferner sichergestellt, dass die Informationen in den ursprünglichen bzw. prozessierten Radarechos bei der Signalübermittlung erhalten bleiben.

Wie bereits oben erwähnt, wird als phasenerhaltende Modulation in einer bevorzugten Ausführungsform eine Amplitudenmodulation und/oder Frequenzmodulation verwendet. Dabei wird die Amplitude bzw. die Frequenz eines Trägersignals einer vorgegebenen Frequenz durch die empfangenen oder prozessierten Radarechos moduliert. In einer besonders bevorzugten Ausführungsform ist die vorgegebene Frequenz des Trägersignals dabei mehr als doppelt so groß wie die maximale Frequenz im ersten Frequenzband. Durch entsprechend hohe Frequenzen des Trägersignals wird automatisch die Unabhängigkeit des modulierten Signals von der Phase des Trägersignals gewährleistet. Die phasenerhaltende Modulation sowie die entsprechende Demodulation können somit auf einfache Weise als inkohärente Amplitudenmodulation und Amplitudendemodulation ausgeführt werden. In einer weiteren Variante ist das Trägersignal Laserlicht, wobei als Amplitudenmodulation die Intensität des Laserlichts moduliert wird.

In einer weiteren besonders bevorzugten Ausführungsform werden die Radarechos der auf der Erdoberfläche reflektierten Radarsignale durch mehrere Empfänger empfangen, wobei sich die phasenerhaltenden Modulationen von verschiedenen Empfängern unterscheiden. Der Begriff der unterschiedlichen phasenerhaltenden Modulationen ist dabei weit zu verstehen. Insbesondere unterscheiden sich zwei phasenerhaltende Modulationen auch dann, wenn sie die gleiche Modulationsart, jedoch mit unterschiedlichen Eigenschaften verwenden. Bei der oben beschriebenen Amplitudenmodulation liegt somit ein Unterschied zwischen zwei Amplitudenmodulationen bereits dann vor, wenn die eine Amplitudenmodulation ein Trägersignal mit einer anderen Frequenz als die andere Amplitudenmodulation verwendet. Durch die Verwendung von unterschiedlichen phasenerhaltenden Modulationen wird die Unterscheidbarkeit der Signale im Falle der gleichzeitigen Nutzung mehrerer Empfänger in der Signalverarbeitungsplattform gewährleistet.

In einer weiteren bevorzugten Ausführungsform umfassen die empfangenen Radarechos in dem jeweiligen Empfänger Signale von mehreren Empfangskanälen, wobei die Signale von verschiedenen Empfangskanälen über unterschiedliche Subaperturen (d.h. unterschiedliche Antennenelemente) des jeweiligen Empfängers empfangen werden. Dabei unterscheiden sich die phasenerhaltenden Modulationen von verschiedenen Empfangskanälen, wodurch die Unterscheidbarkeit der Empfangskanäle gewährleistet wird.

In einer weiteren bevorzugten Ausführungsform unterscheiden sich die phasenerhaltenden Modulationen von verschiedenen Empfängern und/oder von verschiedenen Empfangskanälen in den Frequenzen der Trägersignale der Amplitudenmodulation, wie bereits oben erwähnt wurde.

In einer weiteren Ausführungsform, bei der zur phasenerhaltenden Modulation prozessierte Radarechos genutzt werden, umfasst die Prozessierung in Schritt b) eine digitale Strahlformung. Bei dieser digitalen Strahlformung werden die Signale von mehreren Empfangskanälen ohne Frequenzkonvertierung oder nach einer zweiten Frequenzkonvertierung in das zweite Frequenzband in Signale gewandelt, welche von unterschiedlichen Empfangskeulen des jeweiligen Empfängers empfangen werden. Vorzugsweise handelt es sich dabei um verschiedene Empfangskeulen in Elevation. Im Falle, dass keine Frequenzkonvertierung durchgeführt wird, entsprechen die gewandelten Signale den oben definierten prozessierten Radarsignalen. Im Falle, dass eine zweite Frequenzkonvertierung durchgeführt wird, werden die gewandelten Signale einer dritten Frequenzkonvertierung in das erste Frequenzband unterzogen. Die hierdurch erhaltenen Signale entsprechen dann den obigen prozessierten Radarsignalen.

Die soeben beschriebene digitale Strahlformung ist an sich aus dem Stand der Technik bekannt und ermöglicht die Erfassung eines breiten Streifens auf der Erdoberfläche mit hohem Antennengewinn. Darüber hinaus werden sog. Range-Mehrdeutigkeiten (englisch: range ambiguities) vermieden. Diese Mehrdeutigkeiten resultieren daraus, dass Radarechos gleichzeitig aus unterschiedlichen Range-Positionen im Empfänger empfangen werden. Durch die Verwendung von mehreren Empfangskeulen können diese Signale aufgrund ihres unterschiedlichen Einfallswinkels beim Empfänger unterschieden werden.

In einer weiteren bevorzugten Ausgestaltung des erfindungsgemäßen Verfahrens umfassen die von dem oder den Sendern ausgesendeten Radarsignale frequenzmodulierte Radarpulse, d.h. die Radarsignale werden in der Form von Pulsen vorbestimmter Pulslänge ausgesendet. Solche Radarpulse werden häufig auch als Chirps bezeichnet. Nichtsdestotrotz können die von dem oder den Sendern ausgesendeten Radarsignale auch kontinuierlich ausgesendete frequenzmodulierte Signale umfassen. In diesem Fall wird vorzugsweise die oben beschriebene digitale Strahlformung zur Prozessierung der Signale genutzt.

In einer weiteren bevorzugten Ausführungsform generiert die Signalverarbeitungsplattform aus den SAR-Rohdaten komprimierte Daten mit weniger Speicherbedarf als die SAR-Rohdaten bei deren digitaler Speicherung. Diese Ausführungsform wird vorzugsweise dann verwendet, wenn modulierte Signale von mehreren Empfängern verarbeitet werden, da dann Redundanzen in diesen Signalen zur Komprimierung genutzt werden können bzw. bereits Schritte einer nachgeschalteten SAR-Prozessierung durchgeführt werden können, um die Datenmenge zu reduzieren. Die Komprimierung kann auf unterschiedliche Weise erfolgen und es können insbesondere aus dem Stand der Technik bekannte Kompressionsverfahren genutzt werden.

In einer weiteren bevorzugten Variante empfängt die Signalverarbeitungsplattform modulierte Signale von mehreren Empfängern, wobei die Signalverarbeitungsplattform aus den erhaltenen SAR-Rohdaten der mehreren Empfänger SAR-Interferogramme berechnet und abspeichert. Der Speicherbedarf solcher Interferogramme ist wesentlich geringer als der Speicherbedarf der ursprünglichen SAR-Rohdaten.

In einer weiteren bevorzugten Ausführungsform entspricht die Signalverarbeitungsplattform der Plattform des jeweiligen Senders, d.h. die Signalverarbeitungseinrichtung und der jeweilige Sender befinden sich auf der gleichen Plattform, so dass die modulierten Signale am Ort des Senders empfangen werden. Nichtsdestotrotz besteht auch die Möglichkeit, dass die Signalverarbeitungsplattform eine separate Plattform ist, welche nicht der Plattform des jeweiligen Senders entspricht und welche vorzugsweise auch keinen weiteren, im erfindungsgemäßen Verfahren verwendeten Sender (sofern vorhanden) trägt. Im Besonderen kann dabei eine zentrale Plattform vorgesehen sein, an welche alle Empfänger ihre modulierten Signale übermitteln.

Im Falle, dass die Signalverarbeitungsplattform eine andere Plattform als die Plattform des jeweiligen Senders ist, werden in einer bevorzugten Variante die in Schritt b) verwendeten Oszillatorsignale von dem jeweiligen Sender zu der Signalverarbeitungsplattform übertragen, denn diese Oszillatorsignale werden in der Signalverarbeitungsplattform benötigt.

Die Erfindung betrifft darüber hinaus ein Synthetik-Apertur-Radarsystem zur Fernerkundung der Erdoberfläche, umfassend einen oder mehrere Sender, die sich über der Erdoberfläche bewegen und im Betrieb Radarsignale aussenden, sowie einen oder mehrere Empfänger, die sich über die Erdoberfläche bewegen und im Betrieb Radarechos der auf der Erdoberfläche reflektierten Radarsignale des oder der Empfänger empfangen. Dabei befinden sich alle Sender und Empfänger auf unterschiedlichen Plattformen oberhalb der Erdoberfläche. Ein jeweiliger Sender und ein jeweiliger Empfänger sowie eine Signalverarbeitungsplattform oberhalb der Erdoberfläche sind dazu eingerichtet, das erfindungsgemäße Verfahren bzw. eine oder mehrere bevorzugte Varianten des erfindungsgemäßen Verfahrens durchzuführen.

Die Erfindung umfasst ferner einen Empfänger zum Empfang von Radarechos, wobei der Empfänger dazu eingerichtet ist, als ein Empfänger in dem erfindungsgemäßen Verfahren zu arbeiten. Mit anderen Worten ist der Empfänger dazu eingerichtet, Schritt b) des erfindungsgemäßen Verfahrens durchzuführen. Ferner kann der Empfänger dazu eingerichtet sein, als ein Empfänger in einer oder mehreren bevorzugten Varianten des erfindungsgemäßen Verfahrens zu arbeiten, sofern sich die Varianten auf Schritte beziehen, die durch einen Empfänger durchgeführt werden.

Die Erfindung betrifft darüber hinaus eine Signalverarbeitungsplattform, wobei die Signalverarbeitungsplattform dazu eingerichtet ist, als eine Signalverarbeitungsplattform in dem erfindungsgemäßen Verfahren zu arbeiten. Mit anderen Worten ist die Signalverarbeitungsplattform zur Durchführung des Schritts c) des erfindungsgemäßen Verfahrens eingerichtet. Gegebenenfalls kann die Signalverarbeitungsplattform auch zur Durchführung einer oder mehrerer bevorzugter Varianten des erfindungsgemäßen Verfahrens eingerichtet sein, sofern sich die Varianten auf Schritte beziehen, die durch die Signalverarbeitungsplattform durchgeführt werden.

Ausführungsbeispiele der Erfindung werden nachfolgend anhand der beigefügten Figuren detailliert beschrieben.

Es zeigen:
- Fig. 1: eine schematische Darstellung eines SAR-Systems, mit dem eine Variante des erfindungsgemäßen Verfahrens durchgeführt wird;
- Fig. 2: eine schematische Darstellung der Signalverarbeitung in einem entsprechenden Empfänger des SAR-Systems der Fig. 1;
- Fig. 3: eine schematische Darstellung der Signalverarbeitung in dem Sender des SAR-Systems der Fig. 1; und
- Fig. 4: eine schematische Darstellung einer Ausführungsform eines erfindungsgemäßen SAR-Systems mit kontinuierlich ausgesendeten Radarsignalen und digitaler Strahlformung auf Seiten des Empfängers.

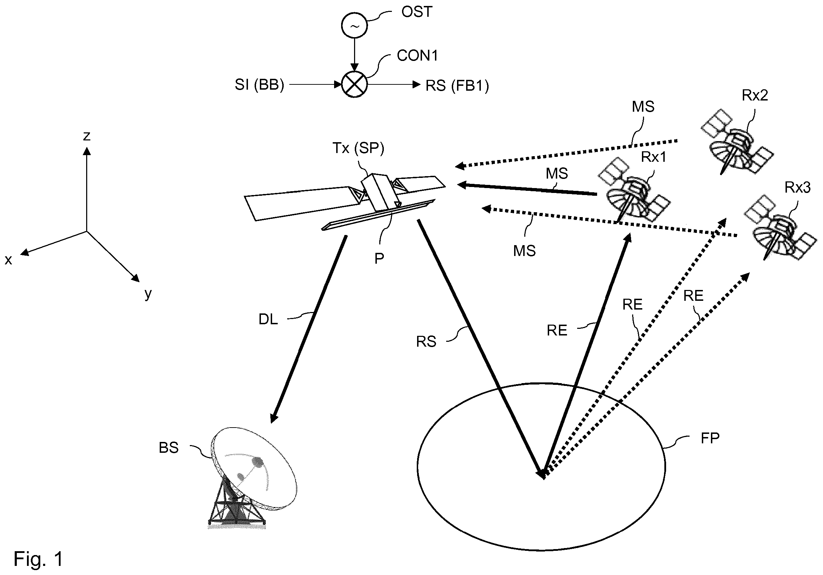

Nachfolgend wird eine Ausführungsform des erfindungsgemäßen Verfahrens basierend auf einem multistatischen SAR-System mit einem einzelnen Sender und mehreren Empfängern auf unabhängigen Plattformen beschrieben. Ein solches System ist in Fig. 1 gezeigt. Der Sender und die Empfänger befinden sich dabei auf unterschiedlichen Satelliten.

Der die Radarsignale aussendende Sender ist mit Bezugszeichen Tx bezeichnet, wobei in der hier beschriebenen Ausführungsform die Plattform des Senders mit der Signalverarbeitungsplattform im Sinne der Ansprüche zusammenfällt. Zur Bezeichnung der Signalverarbeitungsplattform wird in Fig. 1 das zusätzliche Bezugszeichen SP verwendet. Der Sender Tx bewegt sich über der Erdoberfläche in Richtung des Pfeils P. Diese Bewegungsrichtung entspricht der sog. Azimut-Richtung x, die in dem dargestellten kartesischen Koordinatensystem angedeutet ist. Demgegenüber bezeichnet die y-Richtung des Koordinatensystems die sog. Range-Richtung, welche senkrecht zur Azimut-Richtung sowie senkrecht zur vertikalen Höhenrichtung z verläuft. Der entsprechende Höhenwinkel wird dabei auch als Elevation bezeichnet.

Das SAR-System der Fig. 1 umfasst neben dem Sender Tx drei Empfänger Rx1, Rx2 und Rx3, welche sich unabhängig von dem Sender Tx über der Erdoberfläche bewegen und durch welche die von dem Sender Tx ausgesendeten Radarsignale empfangen werden. Im Rahmen der Prozessierung der empfangenen Radarechos werden auch die absoluten und relativen Positionen des Senders und der Empfänger benötigt. Hierfür bestimmen der Sender und die Empfänger ihre Positionen mit entsprechenden GNSS-Empfängern. Diese Positionen werden basierend auf einer Kommunikation zwischen den Satelliten in der Signalverarbeitungsplattform SP gesammelt. Die Berücksichtigung dieser Positionen bei der SAR-Prozessierung ist an sich bekannt und hat für die Erfindung untergeordnete Bedeutung, weshalb hierauf nicht näher eingegangen wird. In Ausführungsformen, in denen die Positionen nicht bei der Signalprozessierung in der Signalverarbeitungsplattform benötigt werden, können diese Positionen auch als Telemetriedaten über einen niederratigen Kommandolink (z.B. ein S-Band-Link) zum Boden übertragen werden.

Im Gegensatz zu monostatischen SAR-Systemen hat die Verwendung von mehreren Empfängern zur Erfassung der Radarechos den Vorteil, dass gleichzeitig eine Szene aus unterschiedlichen Winkeln aufgenommen werden kann, wodurch SAR-Interferometrie ermöglicht wird, um unter anderem Höhenmodelle der Erdoberfläche zu berechnen bzw. Objektbewegungen zu überwachen. Darüber hinaus wird auch die Durchführung von SAR-Tomographie ermöglicht, bei der die vertikale Struktur von semitransparenten Volumenstreuern, wie z.B. Vegetation, erfasst wird.

Ferner haben multistatische SAR-Systeme den Vorteil, dass das Aussenden der Radarsignale und der Empfang der Radarechos in unterschiedlichen Geräten erfolgen. Demzufolge existiert nicht die Beschränkung von monostatischen SAR-Systemen, bei denen durch die Verwendung von kombinierten Sende- und Empfangsantennen Radarechos nicht empfangen werden können, wenn gerade ein Radarpuls ausgesendet wird. Dies führt zu sog. blinden Bereichen auf die Erdoberfläche, welche nicht erfasst werden können.

Wie in Fig. 1 angedeutet, sendet der Sender Tx Radarsignale RS in der Form von frequenzmodulierten Radarpulsen (sog. Chirps) hin zu der Erdoberfläche. Der größte Teil der Energie eines jeweiligen Radarpulses ist dabei auf die Fläche FP auf der Erdoberfläche gerichtet. Diese Fläche wird in der Regel als "Footprint" bzw. "Fußabdruck" des Senders bezeichnet. Die an der Erdoberfläche reflektierten Radarpulse, d.h. die entsprechenden Radarechos RE, werden von den drei dargestellten Empfängern Rx1, Rx2 und Rx3 erfasst. Herkömmlicherweise werden die erfassten Radarechos in den jeweiligen Empfängern prozessiert und dort als SAR-Rohdaten in digitaler Form gespeichert. Anschließend werden diese Rohdaten von den jeweiligen Empfängern über einen sog. Downlink zu einer Bodenstation auf der Erdoberfläche übermittelt. Dies erfordert aufwändige Hardware für jeden einzelnen Empfänger mit entsprechend hohen Kosten. Ferner ist eine Synchronisation der im Sender und in den Empfängern verwendeten Oszillatoren erforderlich, wie weiter unten beschrieben wird.

In an sich bekannter Weise erzeugt der Sender Tx zunächst ein Signal SI in einem Basisfrequenzband BB, d.h. in einem Frequenzband mit einer Mittenfrequenz von 0 Hz. Zum Aussenden dieses Signals wird es in ein hochfrequentes Band mittels einer ersten Konvertierung CON1 konvertiert, wobei dieses hochfrequente Band in Fig. 1 als erstes Frequenzband FB1 bezeichnet wird. Zur Frequenzkonvertierung bzw. Frequenzumsetzung wird ein lokaler Oszillator OST verwendet, der in dem Sender Tx integriert ist und mit der Frequenz oszilliert, die der Mittenfrequenz des Frequenzbands FB1 entspricht. Die soeben beschriebene Frequenzkonvertierung mittels eines Oszillators sowie auch die weiter unten beschriebenen Frequenzkonvertierungen unter Verwendung entsprechender Oszillatoren sind an sich bekannt und werden deshalb nicht weiter im Detail erläutert.

Die in das erste Frequenzband konvertierten Signale werden als die Radarsignale RS durch eine entsprechende Antenne des Senders Tx ausgesendet. In herkömmlichen SAR-Systemen werden die Radarechos der Radarsignale in den einzelnen Empfängern von dem ersten Frequenzband wieder in das Basisfrequenzband rückkonvertiert, wobei hierfür ein entsprechender Oszillator in den jeweiligen Empfängern genutzt wird. Dies führt aufgrund der Verwendung von unterschiedlichen Oszillatoren zu Frequenz- und Phasenfehlern. Um eine Degradation der aus den Radarechos gewonnenen SAR-Rohdaten durch solche Fehler zu vermeiden, werden in herkömmlichen SAR-Systemen die Oszillatorsignale der Empfänger und des Senders miteinander synchronisiert. Üblicherweise wird hierzu eine zusätzliche bidirektionale Datenverbindung (sog. SyncLink) zwischen den Empfängern und dem Sender zum Austausch von Synchronisationsinformationen genutzt. Die Synchronisationsinformationen werden bei der Verarbeitung der SAR-Rohdaten am Boden berücksichtigt, um die Frequenz- und Phasenfehler zu korrigieren. Durch die Verwendung des soeben beschriebenen SyncLinks wird die Komplexität des SAR-Systems erhöht.

Erfindungsgemäß ist eine Synchronisation der Oszillatoren von Empfänger und Sender nicht mehr erforderlich. Dies wird dadurch ermöglicht, dass die Empfänger die empfangenen Signale ohne Veränderung ihrer Phase weiterverarbeiten und als modulierte Signale MS zu dem Sender übertragen. Die Funktion der Empfänger kann somit mit Spiegeln bzw. Weiterleitungsknoten verglichen werden, welche Informationen ohne Phasenveränderung zu dem entsprechenden Sender weitergeben. Dort werden die modulierten Signale weiterverarbeitet. Die hieraus erhaltenen Daten werden schließlich über einen Downlink DL zu einer Bodenstation BS auf der Erdoberfläche übertragen.

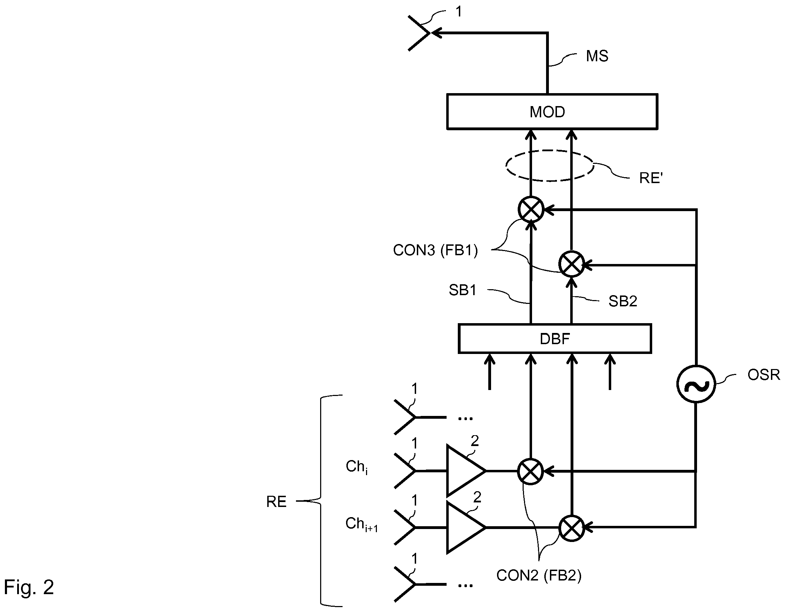

Fig. 2 zeigt in schematischer Darstellung die in jedem der Empfänger Rx1 bis Rx3 durchgeführte Datenverarbeitung. In dem hier beschriebenen Ausführungsbeispiel wird dabei in den jeweiligen Empfängern eine sog. digitale Strahlformung durchgeführt, die weiter unten noch näher erläutert wird. Die einzelnen Radarechos, welche insgesamt mit dem Bezugszeichen RE bezeichnet sind, werden in den jeweiligen Empfängern über eine Vielzahl von Antennen empfangen. Diese Antennen können Antennenelemente einer planaren Antenne oder Antennenelemente eines Feed-Arrays einer Reflektorantenne sein. Nachfolgend werden in den Figuren gezeigte Antennenelemente durchgängig mit dem Bezugszeichen 1 sowie entsprechende Verstärker mit Bezugszeichen 2 bezeichnet. Die einzelnen Antennenelemente, über welche die Radarechos RE empfangen werden, stellen Subaperturen der gesamten Apertur des Empfängers dar. Die einzelnen Subaperturen entsprechen dabei sog. Empfangskanälen. Zwei solcher Empfangskanäle sind in Fig. 2 beispielhaft mit den Bezugszeichen Chᵢ und Chᵢ₊₁ bezeichnet.

Die über die einzelnen Empfangskanäle empfangenen Signale der Radarechos werden anschließend verstärkt. Zur weiteren Signalverarbeitung werden die verstärkten Signale einer zweiten Frequenzkonvertierung CON2 unterzogen, gemäß der die Signale aus dem Frequenzband FB1 in ein Frequenzband FB2 mittels eines lokalen Oszillators OSR im entsprechenden Empfänger gewandelt werden. In einer bevorzugten Variante entspricht das Frequenzband FB2 dabei dem Basisfrequenzband BB. Nichtsdestotrotz kann das Frequenzband FB2 auch in einem anderen Frequenzbereich liegen, welcher jedoch vorzugsweise (ausschließlich) niedrigere Frequenzen als das erste Frequenzband FB1 umfasst. Diese zweite Konvertierung CON2 ist in der Regel erforderlich, damit der Analog-Digital-Wandler, der in der nachfolgend durchgeführten digitalen Strahlformung verwendet wird, die Signale verarbeiten kann. Meist kann dieser Analog-Digital-Wandler Frequenzen ab einer bestimmten Größe nicht mehr prozessieren. In bestimmten Fällen kann jedoch auf die Frequenzwandlung CON2 und analog auf die weiter unten beschriebene Frequenzwandlung CON3 verzichtet werden. Dies kann beispielsweise dann der Fall sein, wenn das Frequenzband der empfangenen Radarpulse relativ niedrige Frequenzen enthält, was beispielsweise für das L-Band der Fall ist.

Die aus der Konvertierung CON2 resultierenden Signale werden schließlich einer an sich bekannten digitalen Strahlformung DBF unterzogen. Gemäß der digitalen Strahlformung werden die frequenzkonvertierten Signale der einzelnen Kanäle nach der Digitalisierung geeignet zeit- und phasenverschoben, so dass hieraus Signale erzeugt werden, welche mittels einer Vielzahl von auf die Erdoberfläche gerichteter schmaler Empfangskeulen empfangen werden. Auf diese Weise werden ein hoher Antennengewinn und die gleichzeitige Erfassung eines breiten Streifens auf der Erdoberfläche ermöglicht. Ferner können sog. Range-Mehrdeutigkeiten vermieden werden, bei denen die Radarechos von unterschiedlichen Radarpulsen gleichzeitig empfangen werden. Diese gleichzeitig empfangenen Radarechos werden mittels der digitalen Strahlformung nunmehr unterscheidbar, da sie aus unterschiedlichen Raumrichtungen stammen und somit durch unterschiedliche Empfangskeulen erfasst werden.

Als Ergebnis der digitalen Strahlformung DBF der Fig. 2 erhält man die entsprechenden Signale verschiedener Empfangskeulen, wobei in dem Beispiel der Fig. 2 zwei Empfangskeulen betrachtet werden, so dass es entsprechende Signale SB1 und SB2 für die entsprechenden Empfangskeulen gibt. In der Regel wird jedoch eine größere Anzahl von Empfangskeulen generiert. Deren Anzahl ist jedoch meistens geringer als die Anzahl der Empfangskanäle. In der hier betrachteten Ausführungsform wird die digitale Strahlformung in Elevation ausgeführt, d.h. die Empfangskeulen strahlen in unterschiedlichen Höhenwinkeln auf die Erdoberfläche.

Die durch die digitale Strahlformung erhaltenen Signale SB1 und SB2 werden anschließend wiederum mit dem Oszillator OSR basierend auf einer dritten Frequenzkonvertierung CON3 in das ursprüngliche erste Frequenzband FB1 rückkonvertiert. Da die Frequenzkonvertierung CON3 in der Regel basierend auf analogen Signalen durchgeführt wird, werden die Signale SB1 und SB2 vor der Frequenzkonvertierung CON3 mit einem nicht dargestellten Digital-Analog-Wandler wieder in analoge Signale gewandelt. Die nach der Frequenzkonvertierung CON3 erhaltenen prozessierten Radarechos werden in Fig. 2 insgesamt mit Bezugszeichen RE' bezeichnet. Durch die Konvertierung CON2 und die anschließende Rückkonvertierung CON3 werden dabei Phasen- und Frequenzfehler, welche sich durch die Verwendung des Oszillators OSR ergeben, kompensiert.

Mittels der Signale RE' wird anschließend eine phasenerhaltende Modulation MOD durchgeführt, d.h. eine Modulation, welche die Phase der Signale RE' nicht verändert. In dem hier beschriebenen Ausführungsbeispiel wird hierzu eine Amplitudenmodulation genutzt, bei der die Amplitude eines Trägersignals, welches eine deutlich höhere Frequenz als die maximale Frequenz des Frequenzband FB1 aufweist, durch die Signale RS' der einzelnen Empfangskeulen moduliert wird. Um die einzelnen Empfangskeulen voneinander unterscheidbar zu machen, werden hierbei unterschiedliche Trägerfrequenzen für die Signale von unterschiedlichen Empfangskeulen genutzt. Je nach Ausgestaltung können die Frequenzen des Trägersignals unterschiedlich gewählt werden. Gegebenenfalls können die Frequenzen auch im optischen Bereich liegen. Vorzugsweise sind die Frequenzen des Trägersignals mehr als doppelt so groß wie die maximale Frequenz im Frequenzband FB1.

Die aus der Amplitudenmodulation MOD resultierenden modulierten Signale sind in Fig. 2 insgesamt mit MS bezeichnet. Diese modulierten Signale werden wiederum über eine entsprechende Antenne hin zu dem Sender Tx der Fig. 1 übertragen. Durch die phasenerhaltende Amplitudenmodulation enthalten sie weiterhin die Nutzinformation der Signale RS'.

Im Unterschied zu der Prozessierung der Fig. 2 werden in herkömmlichen multistatischen SAR-Systemen die empfangenen Radarechos nur einer einzelnen Frequenzkonvertierung mit dem lokalen Oszillator des jeweiligen Empfängers unterzogen, ohne dass eine Rückkonvertierung durchgeführt wird. Aufgrund der Konvertierung mit einem anderen Oszillator als im Sender sind demzufolge Frequenz- und Phasenfehler in den Signalen enthalten, welche mit Hilfe des oben beschriebenen SyncLinks kompensiert werden müssen. Im Gegensatz hierzu enthalten die gemäß Fig. 2 erzeugten modulierten Signale MS aufgrund der Frequenzkonvertierung und der anschließenden Rückkonvertierung keine Frequenz- und Phasenfehler, so dass keine Mechanismen zur Kompensation dieser Fehler vorgesehen werden müssen.

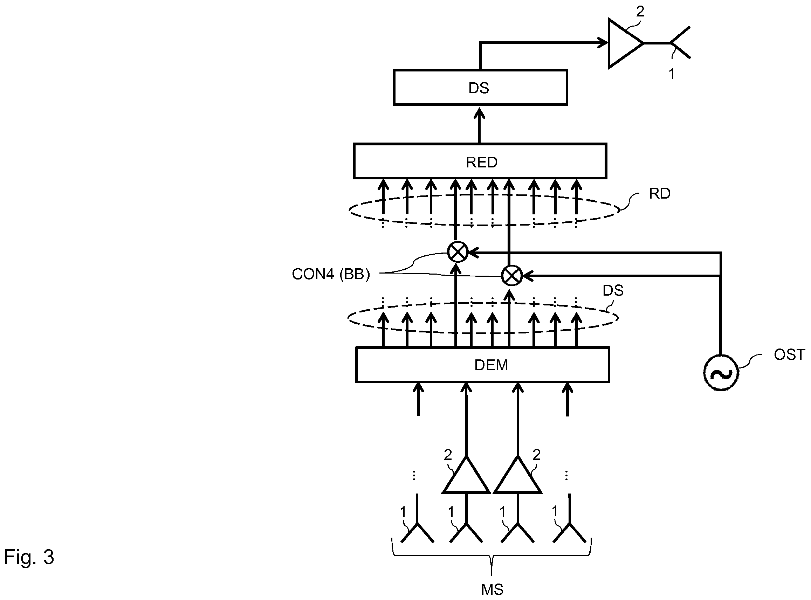

Fig. 3 zeigt die weitere Signalverarbeitung der auf Seiten des Empfängers Tx empfangenen modulierten Signale MS. Die Signale werden nach Verstärkung zunächst einer Amplituden-Demodulation DEM basierend auf den entsprechenden Trägerfrequenzen der Modulation der einzelnen Empfangskeulen unterzogen, wodurch demodulierte Signale DS erhalten werden. Für die Demodulation kann z.B. ein Einhüllenden-Detektor verwendet werden. Anschließend erfolgt eine vierte Frequenzkonvertierung CON4, mit der die Signale in das ursprüngliche Basisfrequenzband BB rücckonvertiert werden. Dabei werden die Oszillatorsignale des Oszillators OST genutzt, d.h. für die Rückkonvertierung wird der gleiche Oszillator wie für die ursprüngliche erste Konvertierung CON1 eingesetzt. Demzufolge kommt es zu keinen Frequenz- und Phasenfehlern.

Die nach der Konvertierung CON4 vorliegenden SAR-Rohdaten RD werden in einer Variante der Erfindung digitalisiert und direkt in einem Speicher hinterlegt, um anschließend über den Downlink DL zur Bodenstation BS übertragen zu werden. Im Unterschied hierzu werden die Rohdaten in dem Ausführungsbeispiel der Fig. 3 nach deren Digitalisierung einer Datenreduktion RED unterzogen. Dabei nutzt man den Vorteil, dass dem Sender Tx die SAR-Rohdaten von allen Empfängern Rx1, Rx2 und Rx3 vorliegen, so dass üblicherweise am Boden durchgeführte Schritte der SAR-Prozessierung bereits im Sender durchgeführt werden können, was in der Regel zu einer geringeren Datenmenge führt. Beispielsweise können in dem Sender die fokussierten SAR-Bilder ermittelt werden und entsprechende SAR-Interferogramme generiert werden. Die Datenmenge der generierten Interferogramme ist dabei wesentlich geringer als die Datenmenge der ursprünglichen SAR-Rohdaten. Die nach der Datenreduktion erhaltenen Daten werden dann in dem Datenspeicherschritt DS in einem entsprechenden Datenspeicher auf dem Sender hinterlegt und anschließend über den Downlink DL an die Bodenstation BS übermittelt.

Im Vorangegangenen wurde eine Ausführungsform der Erfindung in Kombination mit digitaler Strahlformung auf Seiten der jeweiligen Empfänger beschrieben. Nichtsdestotrotz ist es auch möglich, dass auf die digitale Strahlformung auf Seiten des Empfängers verzichtet wird. In diesem Fall werden die empfangenen Radarechos RS, ggf. nach einer Verstärkung, direkt der phasenerhaltenen Modulation MOD unterzogen und anschließend an den Sender übertragen.

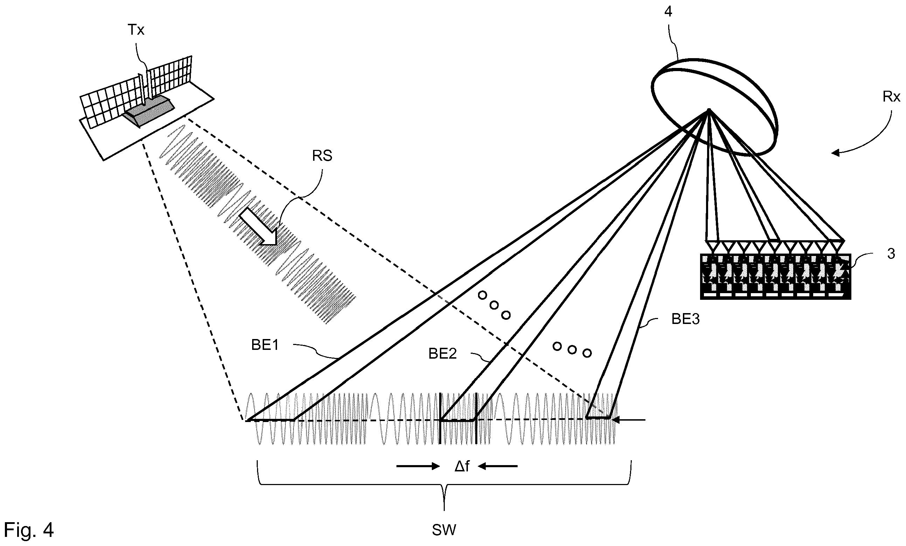

Das vorangegangene Ausführungsbeispiel wurde ferner für Radarsignale in der Form von Radarpulsen beschrieben. Nichtsdestotrotz ist die Erfindung auch für kontinuierlich frequenzmodulierte Radarsignale in der Form sog. FMCW-Signale (FMCW = Frequency Modulated Continuous Wave) anwendbar. Ein solches Ausführungsbeispiel in Kombination mit digitaler Strahlformung ist in Fig. 4 gezeigt. In dieser Figur ist ein bistatisches SAR-System mit einem einzelnen Sender Tx und einem einzelnen Empfänger Rx wiedergegeben. Die Empfangsantenne ist dabei eine Reflektorantenne mit einem Feed-Array 3 aus einer Vielzahl von Antennenelementen und dem entsprechenden Reflektor 4. Wie man erkennt, werden durch den Sender Tx nunmehr kontinuierliche Radarsignale RS mit variierender Frequenz ausgesendet. Mit diesen Signalen wird ein breiter Streifen SW auf der Erdoberfläche ausgeleuchtet.

Zur Erfassung der Radarechos in dem Streifen SW werden Empfangskeulen verwendet, welche durch digitale Strahlformung erzeugt werden und nacheinander entlang des breiten Streifens SW angeordnet sind. Aus Übersichtlichkeitsgründen sind nur drei dieser Empfangskeulen wiedergegeben und mit den Bezugszeichen BE1, BE2 und BE3 bezeichnet. In dem Empfänger Rx werden aufgrund der kontinuierlich ausgesendeten Radarsignale gleichzeitig Radarechos in unterschiedlichen Frequenzspektren Δf empfangen. Durch die Verwendung der verschiedenen Empfangskeulen werden diese Signale jedoch unterscheidbar und somit Range-Mehrdeutigkeiten vermieden.

Die Verarbeitung der Signale im Empfänger Rx erfolgt in der Ausführungsform der Fig. 4 analog zu Fig. 2. Das heißt, es werden prozessierte Radarechos RE' erhalten, mittels denen eine Amplitudenmodulation MOD analog zu Fig. 2 durchgeführt wird. Die amplitudenmodulierten Signale MS werden dann wieder zum Sender Tx übermittelt, der dann die Signalverarbeitung analog zu Fig. 3 durchführt.

Im Vorangegangenen wurden Ausführungsformen beschrieben, bei denen das SAR-Radarsystem immer mehrere Empfänger, jedoch nur einen Sender enthält. Nichtsdestotrotz ist die Erfindung auch für MIMO-SAR-Systeme mit mehreren Empfängern und mehreren Sendern anwendbar.

Gemäß den oben erläuterten Ausführungsformen wurde die in Fig. 3 gezeigte Signalverarbeitung immer in dem Sender Tx durchgeführt, der auch die Radarsignale ausgesendet hat. Dies muss jedoch nicht zwangsläufig der Fall sein. Vielmehr kann auch eine separate Signalverarbeitungsplattform vorgesehen sein, an welche die einzelnen Empfänger die modulierten Signale MS übermitteln. In diesem Fall überträgt der Sender, der die Signale SI ursprünglich in das Frequenzband FB1 konvertiert hat, die Oszillatorsignale des hierfür verwendeten Oszillators OST an die separate Signalverarbeitungsplattform, um Frequenz- und Phasenfehler zu vermeiden.

Die in den obigen Ausführungsformen verwendete phasenerhaltende Modulation führt in der Regel zu einer Vergrößerung der erforderlichen Bandbreite zur Datenübertragung zwischen den Empfängern und der Signalverarbeitungsplattform. Hierdurch wird die Frequenzallokation für die Intersatellitenkommunikation weiter erschwert. Solche Probleme können durch einen optischen Link basierend auf Laserlicht zwischen den Empfängern und der Signalverarbeitungsplattform umgangen werden, wobei die Intensität des Laserlichts moduliert wird. Geeignete Modulatoren existieren heute für Bandbreiten bis weit über 40 GHz und werden bei Radio-over-Fibre (RoF) bereits kommerziell zur Übertragung von breitbandigen RF-Signalen über Glasfaserverbindungen eingesetzt. Zur Implementierung im erfindungsgemäßen Verfahren wird dabei die Glasfaser durch eine optische Freiraumverbindung ersetzt. Eine solche optische Freiraumverbindung wird bereits erfolgreich für die digitale Intersatellitenkommunikation über mehrere 10.000 km genutzt. Demgegenüber ist der benötigte Abstand für den optischen Link in den oben beschriebenen Varianten der Erfindung deutlich kürzer (ca. 10 km), wodurch einerseits die Anforderungen an die optischen Spiegel und deren Ausrichtung stark reduziert und andererseits ein exzellentes Signal-Rausch-Verhältnis erreicht werden kann. Durch Nutzung von abstimmbaren Lasern bzw. Lasern mit unterschiedlichen Wellenlängen kann man dann ohne großen Aufwand eine beinahe beliebig große Anzahl von Kanälen gleichzeitig ohne die Gefahr von wechselseitigen Interferenzen übertragen. Der optische Link basierend auf Laserlicht stellt somit eine bevorzugte Ausführungsform dar, insbesondere da es hier auch vielversprechende Entwicklungen im CubeSat-Bereich gibt, bei denen Gewicht, Leistungsbedarf und Kosten in Verbindung mit vertretbaren Performance-Einbußen drastisch gesenkt werden konnten.

Die im Vorangegangenen beschriebenen Ausführungsformen der Erfindung weisen eine Reihe von Vorteilen auf. Insbesondere werden empfangene bzw. prozessierte Radarechos der einzelnen Empfänger unter Beibehaltung ihrer Phase an den Sender bzw. eine entsprechende Signalverarbeitungsplattform weitergeleitet, ohne dass eine Datenverbindung zur Übertragung von Synchronisationsinformationen benötigt wird. Im Rahmen der Weiterleitung der Signale wird dabei eine Amplitudenmodulation genutzt, wobei durch die Verwendung von unterschiedlichen Trägerfrequenzen verschiedene Empfangskanäle bzw. verschiedene Empfänger unterschieden werden können. Auf diese Weise werden die SAR-Rohdaten von verschiedenen Empfängern zusammengeführt, was eine Datenreduktion ermöglicht, indem beispielsweise Verarbeitungsschritte der nachgeschalteten SAR-Prozessierung bereits vor der Datenübermittlung zur Erdoberfläche durchgeführt werden. Darüber hinaus kann die Hardware in den einzelnen Empfängern wesentlich kostengünstiger ausgestaltet werden, da die einzelnen Empfänger nicht als vollständige Radarempfänger mit kohärenter Demodulation ausgestaltet sein müssen und kein leistungsstarkes Übertragungssystem zur Übertragung der Rohdaten zum Boden brauchen. Ferner wird kein großer Datenspeicher zum Vorhalten der Rohdaten in den einzelnen Empfängern benötigt.

## Patentansprüche

1. Synthetik-Apertur-Radarverfahren zur Fernerkundung der Erdoberfläche, bei dem von einem oder mehreren Sendern (Tx), die sich über der Erdoberfläche bewegen, Radarsignale (RS) ausgesendet werden und von einem oder mehreren Empfängern (Rx1, Rx2, Rx3), die sich über der Erdoberfläche bewegen, Radarechos (RE) der auf der Erdoberfläche (GR) reflektierten Radarsignale (RS) empfangen werden, wobei sich alle Sender (Tx) und Empfänger (Rx1, Rx2, Rx3) auf unterschiedlichen Plattformen oberhalb der Erdoberfläche befinden und die Bewegungen der Plattformen des oder der Sender (Tx) und des oder der Empfänger (Rx1, Rx2, Rx3) unabhängig voneinander sind, wobei ein jeweiliger Sender (Tx) und ein jeweiliger Empfänger (Rx1, Rx2, Rx3) sowie eine Signalverarbeitungsplattform (SP) oberhalb der Erdoberfläche folgende Schritte durchführen:
a) der jeweilige Sender (Tx) erzeugt Signale (SI) in einem Basisfrequenzband (BB) und führt eine erste Frequenzkonvertierung (CON1) dieser Signale (SI) in ein erstes Frequenzband (FB1) mittels Oszillatorsignalen eines Oszillators (OST) des jeweiligen Senders (Tx) durch, wobei die konvertierten Signale als die Radarsignale (RS) ausgesendet werden;
b) der jeweilige Empfänger (Rx1, Rx2, Rx3) empfängt die Radarechos (RE) der Radarsignale (RS) des jeweiligen Senders (Tx) und führt eine phasenerhaltende Modulation (MOD) mittels der empfangenen Radarechos (RE) oder mittels prozessierter Radarechos (RE') durch und sendet die hieraus erhaltenen modulierten Signale (MS) zu der Signalverarbeitungsplattform (SP), wobei die prozessierten Radarechos (RE') aus den empfangenen Radarechos (RE) mittels einer Prozessierung ohne darin enthaltener Frequenzkonvertierung oder mittels einer Prozessierung erhalten werden, welche eine oder mehrere zweite Frequenzkonvertierungen (CON2) in ein zweites Frequenzband (FB2) umfasst und bei der jede zweite Frequenzkonvertierung (CON2) durch eine zugeordnete dritte Frequenzkonvertierung (CON3) in das erste Frequenzband (FB1) rückgängig gemacht wird, wobei die zweite oder zweiten Frequenzkonvertierungen (CON2) sowie die dritte oder dritten Frequenzkonvertierungen (CON3) mittels Oszillatorsignalen des gleichen Oszillators (OSR) des jeweiligen Empfängers (Rx1, Rx2, Rx3) durchgeführt werden;
c) die Signalverarbeitungsplattform (SP) demoduliert die empfangenen modulierten Signale (MS) und führt eine vierte Frequenzkonvertierung (CON4) der demodulierten Signale (DS) in das Basisfrequenzband (BB) mittels Oszillatorsignalen des Oszillators (OST) des jeweiligen Senders (Tx) durch, wodurch SAR-Rohdaten (RD) erhalten werden, aus denen die Signalverarbeitungsplattform (SP) digitale Daten generiert und abspeichert.

2. Verfahren nach Anspruch 1, **dadurch gekennzeichnet, dass** die phasenerhaltende Modulation (MOD) eine Amplitudenmodulation und/oder Frequenzmodulation eines Trägersignals einer vorgegebenen Frequenz durch die empfangenen oder prozessierten Radarechos (RE, RE') ist.

3. Verfahren nach Anspruch 2, **dadurch gekennzeichnet, dass** die vorgegebene Frequenz des Trägersignals mehr als doppelt so groß wie die maximale Frequenz im ersten Frequenzband (FB1) ist.

4. Verfahren nach Anspruch 2 oder 3, **dadurch gekennzeichnet, dass** die phasenerhaltende Modulation (MOD) eine Amplitudenmodulation ist und das Trägersignal Laserlicht ist, dessen Intensität moduliert wird.

5. Verfahren nach einem der vorhergehenden Ansprüche, **dadurch gekennzeichnet, dass** mehrere Empfänger (Rx1, Rx2, Rx3) die Radarechos (RE) der auf der Erdoberfläche (GR) reflektierten Radarsignale (RS) empfangen, wobei sich die phasenerhaltenden Modulationen (MOD) von verschiedenen Empfängern (Rx1, Rx2, Rx3) unterscheiden.

6. Verfahren nach einem der vorhergehenden Ansprüche, **dadurch gekennzeichnet, dass** die empfangenen Radarechos (RE) in dem jeweiligen Empfänger (Rx1, Rx2, Rx3) Signale von mehreren Empfangskanälen (Chi, Chi+i) umfassen, wobei die Signale von verschiedenen Empfangskanälen (Chi, Chi+i) über unterschiedliche Subaperturen des jeweiligen Empfängers (Rx1, Rx2, Rx3) empfangen werden, wobei sich die phasenerhaltenden Modulationen (MOD) von verschiedenen Empfangskanälen (Rx1, Rx2, Rx3) unterscheiden.

7. Verfahren nach Anspruch 5 oder 6 in Kombination mit einem der Ansprüche 2 bis 4 **dadurch gekennzeichnet, dass** sich die phasenerhaltenden Modulationen (MOD) von verschiedenen Empfängern (Rx1, Rx2, Rx3) und/oder verschiedenen Empfangskanälen (Chᵢ, Chᵢ₊₁) in den Frequenzen der Trägersignale der Amplitudenmodulation unterscheiden.

8. Verfahren nach Anspruch 6 oder nach Anspruch 7 in Kombination mit Anspruch 6, **dadurch gekennzeichnet, dass** die Prozessierung in Schritt b) eine digitale Strahlformung (DBF) umfasst, bei der die Signale der mehreren Empfangskanäle (Chi, Chi+i) ohne Frequenzkonvertierung oder nach einer zweiten Frequenzkonvertierung (CON2) in das zweite Frequenzband (FB2) in Signale (SB1, SB2) gewandelt werden, welche von unterschiedlichen Empfangskeulen (BE1, BE2, BE3) des jeweiligen Empfängers (Rx1, Rx2, Rx3) empfangen werden, wobei die gewandelten Signale (SB1, SB2) im Falle, dass keine Frequenzkonvertierung durchgeführt wird, den prozessierten Radarsignalen (RS') entsprechen und wobei im Falle, dass eine zweite Frequenzkonvertierung (CON2) durchgeführt wird, die prozessierten Radarsignale (RS') nach einer dritten Frequenzkonvertierung (CON3) der gewandelten Signale (SB1, SB2) in das erste Frequenzband (FB1) erhalten werden.

9. Verfahren nach einem der vorhergehenden Ansprüche, **dadurch gekennzeichnet, dass** die von dem oder den Sendern (Tx) ausgesendeten Radarsignale (RS) frequenzmodulierte Radarpulse umfassen.

10. Verfahren nach einem der vorhergehenden Ansprüche, **dadurch gekennzeichnet, dass** die von dem oder den Sendern (Tx) ausgesendeten Radarsignale (RS) kontinuierlich ausgesendete frequenzmodulierte Signale umfassen.

11. Verfahren nach einem der vorhergehenden Ansprüche, **dadurch gekennzeichnet, dass** die Signalverarbeitungsplattform (SP) aus den SAR-Rohdaten komprimierte Daten mit weniger Speicherbedarf als die SAR-Rohdaten (RD) bei deren digitaler Speicherung generiert.

12. Verfahren nach einem der vorhergehenden Ansprüche, **dadurch gekennzeichnet, dass** die Signalverarbeitungsplattform (SP) modulierte Signale (MS) von mehreren Empfängern (Rx1, Rx2, Rx3) empfängt, wobei die Signalverarbeitungsplattform (SP) aus den erhaltenen SAR-Rohdaten der mehreren Empfänger (Rx1, Rx2, Rx3) SAR-Interferogramme berechnet und als die digitalen Daten abspeichert.

13. Verfahren nach einem der vorhergehenden Ansprüche, **dadurch gekennzeichnet, dass** die Signalverarbeitungsplattform (SP) der Plattform des jeweiligen Senders (Tx) entspricht oder eine separate Plattform ist, welche sich von der Plattform des jeweiligen Senders (Tx) unterscheidet.

14. Verfahren nach einem der vorhergehenden Ansprüche, **dadurch gekennzeichnet, dass** die Signalverarbeitungsplattform (SP) eine andere Plattform als die Plattform des jeweiligen Senders (Tx) ist, wobei die in Schritt b) verwendeten Oszillatorsignale von dem jeweiligen Sender (Tx) zu der Signalverarbeitungsplattform (SP) übertragen werden.

15. Verfahren nach einem der vorhergehenden Ansprüche, **dadurch gekennzeichnet, dass** die Signalverarbeitungsplattform (SP) die gespeicherten digitalen Daten zu einer Bodenstation (BS) auf der Erdoberfläche sendet.

16. Synthetik-Apertur-Radarsystem zur Fernerkundung der Erdoberfläche, umfassend einen oder mehrere Sender (Tx), die sich über der Erdoberfläche bewegen und im Betrieb Radarsignale (RS) aussenden, und einen oder mehrere Empfänger (Rx1, Rx2, Rx3), die sich über der Erdoberfläche bewegen und im Betrieb Radarechos (RE) der auf der Erdoberfläche (GR) reflektierten Radarsignale (RS) des oder der Sender (Tx) empfangen, wobei sich alle Sender (Tx) und Empfänger (Rx1, Rx2, Rx3) auf unterschiedlichen Plattformen oberhalb der Erdoberfläche befinden und die Bewegungen der Plattformen des oder der Sender (Tx) und des oder der Empfänger (Rx1, Rx2, Rx3) unabhängig voneinander sind, wobei ein jeweiliger Sender (Tx) und ein jeweiliger Empfänger (Rx1, Rx2, Rx3) sowie eine Signalverarbeitungsplattform (SP) oberhalb der Erdoberfläche dazu eingerichtet sind, folgende Schritte durchzuführen:
a) der jeweilige Sender (Tx) erzeugt Signale (SI) in einem Basisfrequenzband (BB) und führt eine erste Frequenzkonvertierung (CON1) dieser Signale (SI) in ein erstes Frequenzband (FB1) mittels Oszillatorsignalen eines Oszillators (OST) des jeweiligen Senders (Tx) durch, wobei die konvertierten Signale als die Radarsignale (RS) ausgesendet werden;
b) der jeweilige Empfänger (Rx1, Rx2, Rx3) empfängt die Radarechos (RE) der Radarsignale (RS) des jeweiligen Senders (Tx) und führt eine phasenerhaltende Modulation (MOD) mittels der empfangenen Radarechos (RE) oder mittels prozessierter Radarechos (RE') durch und sendet die hieraus erhaltenen modulierten Signale (MS) zu der Signalverarbeitungsplattform (SP), wobei die prozessierten Radarechos (RE') aus den empfangenen Radarechos (RE) mittels einer Prozessierung ohne darin enthaltener Frequenzkonvertierung oder mittels einer Prozessierung erhalten werden, welche eine oder mehrere zweite Frequenzkonvertierungen (CON2) in ein zweites Frequenzband (FB2) umfasst und bei der jede zweite Frequenzkonvertierung (CON2) durch eine zugeordnete dritte Frequenzkonvertierung (CON3) in das erste Frequenzband (FB1) rückgängig gemacht wird, wobei die zweite oder zweiten Frequenzkonvertierungen (CON2) sowie die dritte oder dritten Frequenzkonvertierungen (CON3) mittels Oszillatorsignalen des gleichen Oszillators (OSR) des jeweiligen Empfängers (Rx1, Rx2, Rx3) durchgeführt werden;
c) die Signalverarbeitungsplattform (SP) demoduliert die empfangenen modulierten Signale (MS) und führt eine vierte Frequenzkonvertierung (CON4) der demodulierten Signale (DS) in das Basisfrequenzband (BB) mittels Oszillatorsignalen des Oszillators (OST) des jeweiligen Senders (Tx) durch, wodurch SAR-Rohdaten (RD) erhalten werden, aus denen die Signalverarbeitungsplattform (SP) digitale Daten generiert und abspeichert.

17. Synthetik-Apertur-Radarsystem nach Anspruch 16, **dadurch gekennzeichnet, dass** das System zur Durchführung eines Verfahrens nach einem der Ansprüche 2 bis 15 eingerichtet ist.

18. Empfänger zum Empfang von Radarechos, wobei der Empfänger (Rx1, Rx2, Rx3) dazu eingerichtet ist, als ein Empfänger in einem Verfahren nach einem der Ansprüche 1 bis 15 zu arbeiten.

19. Signalverarbeitungsplattform, wobei die Signalverarbeitungsplattform (SP) dazu eingerichtet ist, als eine Signalverarbeitungsplattform (SP) in einem Verfahren nach einem der Ansprüche 1 bis 15 zu arbeiten.

## Claims

1. A synthetic aperture radar method for remote sensing of the surface of the Earth, in which radar signals (RS) are emitted by one or more transmitter(s) (Tx) moving above the surface of the Earth and radar echoes (RE) of the radar signals (RS) reflected on the surface of the Earth (GR) are received by one or more receiver(s) (Rx1, Rx2, Rx3) moving above the surface of the Earth, wherein all transmitter(s) (Tx) and receiver(s) (Rx1, Rx2, Rx3) are located on different platforms above the surface of the Earth and the movements of the platforms of the transmitter(s) (Tx) and the receiver(s) (Rx1, Rx2, Rx3) are independent of each other, wherein a respective transmitter (Tx) and a respective receiver (Rx1, Rx2, Rx3) as well as a signal processing platform (SP) above the surface of the Earth perform the following steps:
a) the respective transmitter (Tx) generates signals (SI) in a base frequency band (BB) and performs a first frequency conversion (CON1) of these signals (SI) into a first frequency band (FB1) by means of oscillator signals of an oscillator (OST) of the respective transmitter (Tx), wherein the converted signals are emitted as the radar signals (RS);
b) the respective receiver (Rx1, Rx2, Rx3) receives the radar echoes (RE) of the radar signals (RS) of the respective transmitter (Tx) and performs a phase preserving modulation (MOD) by means of the received radar echoes (RE) or by means of processed radar echoes (RE') and transmits the modulated signals (MS) obtained therefrom to the signal processing platform (SP), wherein the processed radar echoes (RE') are obtained from the received radar echoes (RE) by means of a processing without frequency conversion or by means of a processing which comprises one or more second frequency conversions (CON2) into a second frequency band (FB2) and in which each second frequency conversion (CON2) is reversed by an associated third frequency conversion (CON3) into the first frequency band (FB1), wherein the second frequency conversion(s) (CON2) and the third frequency conversion(s) (CON3) are performed by means of oscillator signals of the same oscillator (OSR) of the respective receiver (Rx1, Rx2, Rx3);
c) the signal processing platform (SP) demodulates the received modulated signals (MS) and performs a fourth frequency conversion (CON4) of the demodulated signals (DS) into the base frequency band (BB) by means of oscillator signals of the oscillator (OST) of the respective transmitter (Tx), thereby obtaining SAR raw data (RD) from which the signal processing platform (SP) generates and stores digital data.

2. The method according to claim 1, **characterized in that** the phase preserving modulation (MOD) is an amplitude modulation and/or frequency modulation of a carrier signal of a predetermined frequency by the received or processed radar echoes (RE, RE').

3. The method according to claim 2, **characterized in that** the predetermined frequency of the carrier signal is more than twice the maximum frequency in the first frequency band (FB1).

4. The method according to claim 2 or 3, **characterized in that** the phase preserving modulation (MOD) is an amplitude modulation and the carrier signal is laser light whose intensity is modulated.

5. The method according to one of the preceding claims, **characterized in that** a plurality of receivers (Rx1, Rx2, Rx3) receive the radar echoes (RE) of the radar signals (RS) reflected on the surface of the Earth (GR), wherein the phase-preserving modulations (MOD) of different receivers (Rx1, Rx2, Rx3) are different.

6. The method according to one of the preceding claims, **characterized in that** the received radar echoes (RE) in the respective receiver (Rx1, Rx2, Rx3) comprise signals from a plurality of receive channels (Chi, Chi+i), wherein the signals are received by different receive channels (Chi, Chi+i) via different sub-apertures of the respective receiver (Rx1, Rx2, Rx3), wherein the phase-preserving modulations (MOD) of different receive channels (Rx1, Rx2, Rx3) are different.

7. The method according to claim 5 or 6 in combination with one of the claims 2 to 4 **characterized in that** the phase-preserving modulations (MOD) of different receivers (Rx1, Rx2, Rx3) and/or different receive channels (Chi, Chi+i) differ in the frequencies of the carrier signals of the amplitude modulation.

8. The method according to claim 6 or according to claim 7 in combination with claim 6, **characterized in that** the processing in step b) comprises a digital beamforming (DBF) in which the signals of the plurality of receive channels (Chi, Chi+i) are converted without frequency conversion or after a second frequency conversion (CON2) into the second frequency band (FB2) into signals (SB1, SB2) which are received by different receive lobes (BE1, BE2, BE3) of the respective receiver (Rx1, Rx2, Rx3), wherein, in the case where no frequency conversion is performed, the converted signals (SB1, SB2) correspond to the processed radar signals (RS'), and in the case where a second frequency conversion (CON2) is performed, the processed radar signals (RS') are obtained after a third frequency conversion (CON3) of the converted signals (SB1, SB2) into the first frequency band (FB1).

9. The method according to one of the preceding claims, **characterized in that** the radar signals (RS) emitted by the transmitter(s) (Tx) comprise frequency modulated radar pulses.

10. The method according to one of the preceding claims, **characterized in that** the radar signals (RS) emitted by the transmitter(s) (Tx) comprise continuously emitted frequency modulated signals.

11. The method according to one of the preceding claims, **characterized in that** the signal processing platform (SP) generates from the raw SAR data compressed data with less memory requirements than the raw SAR data (RD) when stored digitally.

12. The method according to one of the preceding claims, **characterized in that** the signal processing platform (SP) receives modulated signals (MS) from a plurality of receivers (Rx1, Rx2, Rx3), wherein the signal processing platform (SP) calculates SAR interferograms from the obtained SAR raw data of the plurality of receivers (Rx1, Rx2, Rx3) and stores them as the digital data.

13. The method according to one of the preceding claims, **characterized in that** the signal processing platform (SP) corresponds to the platform of the respective transmitter (Tx) or is a separate platform which is different from the platform of the respective transmitter (Tx).

14. The method according to one of the preceding claims, **characterized in that** the signal processing platform (SP) is a platform different from the platform of the respective transmitter (Tx), wherein the oscillator signals used in step b) are transmitted from the respective transmitter (Tx) to the signal processing platform (SP).

15. The method according to one of the preceding claims, **characterized in that** the signal processing platform (SP) transmits the stored digital data to a ground station (BS) on the surface of the Earth.

16. Synthetic aperture radar system for remote sensing of the surface of the Earth, comprising one or more transmitter(s) (Tx) moving above the surface of the Earth and emitting radar signals (RS) during operation, and one or more receiver(s) (Rx1, Rx2, Rx3) moving above the surface of the Earth and receiving radar echoes (RE) of the radar signals (RS) of the transmitter(s) (Tx) reflected on the surface of the Earth (GR) during operation, wherein all transmitter(s) (Tx) and receiver(s) (Rx1, Rx2, Rx3) are located on different platforms above the surface of the Earth and the movements of the platforms of the transmitter(s) (Tx) and the receiver(s) (Rx1, Rx2, Rx3) are independent of each other, wherein a respective transmitter (Tx) and a respective receiver (Rx1, Rx2, Rx3) as well as a signal processing platform (SP) above the surface of the Earth are adapted to perform the following steps:
a) the respective transmitter (Tx) generates signals (SI) in a base frequency band (BB) and performs a first frequency conversion (CON1) of these signals (SI) into a first frequency band (FB1) by means of oscillator signals of an oscillator (OST) of the respective transmitter (Tx), wherein the converted signals are emitted as the radar signals (RS);
b) the respective receiver (Rx1, Rx2, Rx3) receives the radar echoes (RE) of the radar signals (RS) of the respective transmitter (Tx) and performs a phase preserving modulation (MOD) by means of the received radar echoes (RE) or by means of processed radar echoes (RE') and transmits the modulated signals (MS) obtained therefrom to the signal processing platform (SP), wherein the processed radar echoes (RE') are obtained from the received radar echoes (RE) by means of a processing without frequency conversion or by means of a processing which comprises one or more second frequency conversions (CON2) into a second frequency band (FB2) and in which each second frequency conversion (CON2) is reversed by an associated third frequency conversion (CON3) into the first frequency band (FB1), wherein the second frequency conversion(s) (CON2) and the third frequency conversion(s) (CON3) are performed by means of oscillator signals of the same oscillator (OSR) of the respective receiver (Rx1, Rx2, Rx3);
c) the signal processing platform (SP) demodulates the received modulated signals (MS) and performs a fourth frequency conversion (CON4) of the demodulated signals (DS) into the base frequency band (BB) by means of oscillator signals of the oscillator (OST) of the respective transmitter (Tx), thereby obtaining SAR raw data (RD) from which the signal processing platform (SP) generates and stores digital data.

17. The synthetic aperture radar system according to claim 16, **characterized in that** the system is adapted to perform a method according to one of the claims 2 to 15.

18. A receiver for receiving radar echoes, wherein the receiver (Rx1, Rx2, Rx3) is adapted to operate as a receiver in a method according to one of the claims 1 to 15.

19. A signal processing platform, wherein the signal processing platform (SP) is adapted to operate as a signal processing platform (SP) in a method according to one of the claims 1 to 15.

## Revendications

1. Procédé de radar à synthèse d'ouverture pour la télédétection de la surface terrestre, lors duquel des signaux radar (RS) sont émis par un ou plusieurs émetteurs (Tx) qui se déplacent au-dessus de la surface terrestre et des échos radar (RE) des signaux radar (RS) réfléchis sur la surface terrestre (GR) sont reçus par un ou plusieurs récepteurs (Rx1, Rx2, Rx3) qui se déplacent au-dessus de la surface terrestre, dans lequel tous les émetteurs (Tx) et récepteurs (Rx1, Rx2, Rx3) se trouvent sur différentes plates-formes au-dessus de la surface terrestre et les mouvements des plates-formes de l'émetteur ou des émetteurs (Tx) et du ou des récepteur(s) (Rx1, Rx2, Rx3) sont indépendants l'un de l'autre, dans lequel un émetteur respectif (Tx) et un récepteur respectif (Rx1, Rx2, Rx3) ainsi qu'une plate-forme de traitement de signal (SP) au-dessus de la surface terrestre réalisent les étapes suivantes :
a) l'émetteur respectif (Tx) génère des signaux (SI) dans une bande de fréquences de base (BB) et réalise une première conversion de fréquence (CON1) de ces signaux (SI) dans une première bande de fréquences (FB1) au moyen de signaux d'oscillateur d'un oscillateur (OST) de l'émetteur respectif (Tx), dans lequel les signaux convertis sont émis en tant que les signaux radar (RS) ;
b) le récepteur respectif (Rx1, Rx2, Rx3) reçoit les échos radar (RE) des signaux radar (RS) de l'émetteur respectif (Tx) et réalise une modulation à préservation de phase (MOD) au moyen des échos radar reçus (RE) ou au moyen d'échos radar traités (RE'), et envoie les signaux modulés (MS) obtenus à partir de celle-ci vers la plate-forme de traitement de signal (SP), dans lequel les échos radar traités (RE') provenant des échos radar reçus (RE) sont obtenus au moyen d'un traitement sans conversion de fréquence contenue en son sein ou au moyen d'un traitement qui comprend une ou plusieurs deuxièmes conversions de fréquence (CON2) dans une seconde bande de fréquences (FB2) et est annulé lors de la conversion de fréquence (CON2) sur deux par une troisième conversion de fréquence associée (CON3) dans la première bande de fréquences (FB1), dans lequel la ou les deuxième(s) conversion(s) de fréquence (CON2) ainsi que la ou les troisième(s) conversion(s) de fréquence (CON3) sont réalisées au moyen de signaux d'oscillateur du même oscillateur (OSR) du récepteur respectif (Rx1, Rx2, Rx3) ;
c) la plate-forme de traitement de signal (SP) démodule les signaux modulés reçus (MS) et réalise une quatrième conversion de fréquence (CON4) des signaux démodulés (DS) dans la bande de fréquences de base (BB) au moyen de signaux d'oscillateur de l'oscillateur (OST) de l'émetteur respectif (Tx), moyennant laquelle des données brutes de RSO (RD) sont obtenues à partir desquelles la plate-forme de traitement de signal (SP) génère et mémorise des données numériques.

2. Procédé selon la revendication 1, **caractérisé en ce que** la modulation à préservation de phase (MOD) est une modulation d'amplitude et/ou modulation de fréquence d'un signal porteur d'une fréquence prédéfinie par les échos radar reçus ou traités (RE, RE').

3. Procédé selon la revendication 2, **caractérisé en ce que** la fréquence prédéfinie du signal porteur est plus du double de la fréquence maximale dans la première bande de fréquences (FB1).

4. Procédé selon la revendication 2 ou 3, **caractérisé en ce que** la modulation à préservation de phase (MOD) est une modulation d'amplitude et le signal porteur est de la lumière laser dont l'intensité est modulée.

5. Procédé selon une des revendications précédentes, **caractérisé en ce que** plusieurs récepteurs (Rx1, Rx2, Rx3) reçoivent les échos radar (RE) des signaux radar (RS) réfléchis sur la surface terrestre (GR), dans lequel les modulations à préservation de phase (MOD) de différents récepteurs (Rx1, Rx2, Rx3) diffèrent.

6. Procédé selon une des revendications précédentes, **caractérisé en ce que** les échos radar reçus (RE) dans le récepteur respectif (Rx1, Rx2, Rx3) comprennent des signaux de plusieurs canaux de réception (Chi, Chi+i), dans lequel les signaux de différents canaux de réception (Chi, Chi+i) sont reçus par le biais de différentes sous-ouvertures du récepteur respectif (Rx1, Rx2, Rx3), dans lequel les modulations à préservation de phase (MOD) de différents canaux de réception (Rx1, Rx2, Rx3) diffèrent.

7. Procédé selon la revendication 5 ou 6 en combinaison avec une des revendications 2 à 4, **caractérisé en ce que** les modulations à préservation de phase (MOD) de différents récepteurs (Rx1, Rx2, Rx3) et/ou différents canaux de réception (Chi, Chi+i) diffèrent dans les fréquences des signaux porteurs de la modulation d'amplitude.

8. Procédé selon la revendication 6 ou selon la revendication 7 en combinaison avec la revendication 6, **caractérisé en ce que** le traitement à l'étape b) comprend une formation de faisceau numérique (DBF) lors de laquelle les signaux de la pluralité de canaux de réception (Chi, Chi+i) sont transformés sans conversion de fréquence ou après une deuxième conversion de fréquence (CON2) dans la seconde bande de fréquences (FB2) en signaux (SB1, SB2) qui sont reçus par différents lobes de réception (BE1, BE2, BE3) du récepteur respectif (Rx1, Rx2, Rx3), dans lequel les signaux transformés (SB1, SB2) correspondent, au cas où aucune conversion de fréquence n'est réalisée, aux signaux radar traités (RS') et dans lequel au cas où une deuxième conversion de fréquence (CON2) est réalisée, les signaux radar traités (RS') sont obtenus après un troisième conversion de fréquence (CON3) des signaux transformés (SB1, SB2) dans la première bande de fréquences (FB1).

9. Procédé selon une des revendications précédentes, **caractérisé en ce que** les signaux radar (RS) émis par le ou les émetteurs (Tx) comprennent des impulsions radar à modulation de fréquence.

10. Procédé selon une des revendications précédentes, **caractérisé en ce que** les signaux radar (RS) émis par le ou les émetteurs (Tx) comprennent des signaux à modulation de fréquence, émis en continu.

11. Procédé selon une des revendications précédentes, **caractérisé en ce que** la plate-forme de traitement de signal (SP) génère des données comprimées à partir des données brutes de RSO avec moins d'encombrement que les données brutes de RSO (RD) lors de leur mémorisation numérique.

12. Procédé selon une des revendications précédentes, **caractérisé en ce que** la plate-forme de traitement de signal (SP) reçoit des signaux modulés (MS) de plusieurs récepteurs (Rx1, Rx2, Rx3), dans lequel la plate-forme de traitement de signal (SP) calcule à partir des données brutes de RSO obtenues de la pluralité de récepteurs (Rx1, Rx2, Rx3) des interférogrammes de RSO et les mémorise en tant que les données numériques.

13. Procédé selon une des revendications précédentes, **caractérisé en ce que** la plate-forme de traitement de signal (SP) correspond à la plate-forme de l'émetteur respectif (Tx) ou est une plate-forme séparée qui diffère de la plate-forme de l'émetteur respectif (Tx).

14. Procédé selon une des revendications précédentes, **caractérisé en ce que** la plate-forme de traitement de signal (SP) est une autre plate-forme que la plate-forme de l'émetteur respectif (Tx), dans lequel les signaux d'oscillateur utilisés à l'étape b) sont transmis par l'émetteur respectif (Tx) à la plate-forme de traitement de signal (SP).

15. Procédé selon une des revendications précédentes, **caractérisé en ce que** la plate-forme de traitement de signal (SP) envoie les données numériques mémorisées à une station au sol (BS) sur la surface terrestre.

16. Système de radar à synthèse d'ouverture pour la télédétection de la surface terrestre, comprenant un ou plusieurs émetteurs (Tx) qui se déplacent au-dessus de la surface terrestre et émettent des signaux radar (RS) en service, et un ou plusieurs récepteurs (Rx1, Rx2, Rx3) qui se déplacent au-dessus de la surface terrestre et reçoivent des échos radar (RE) des signaux radar (RS) réfléchis sur la surface terrestre (GR) du ou des émetteurs (Tx) en service, dans lequel tous les émetteurs (Tx) et récepteurs (Rx1, Rx2, Rx3) se trouvent sur différentes plates-formes au-dessus de la surface terrestre et les mouvements des plates-formes de l'émetteur ou des émetteurs (Tx) et du ou des récepteur(s) (Rx1, Rx2, Rx3) sont indépendants l'un de l'autre, dans lequel un émetteur respectif (Tx) et un récepteur respectif (Rx1, Rx2, Rx3) ainsi qu'une plate-forme de traitement de signal (SP) au-dessus de la surface terrestre sont configurés pour réaliser les étapes suivantes :
a) l'émetteur respectif (Tx) génère des signaux (SI) dans une bande de fréquences de base (BB) et réalise une première conversion de fréquence (CON1) de ces signaux (SI) dans une première bande de fréquences (FB1) au moyen de signaux d'oscillateur d'un oscillateur (OST) de l'émetteur respectif (Tx), dans lequel les signaux convertis sont émis en tant que les signaux radar (RS) ;
b) le récepteur respectif (Rx1, Rx2, Rx3) reçoit les échos radar (RE) des signaux radar (RS) de l'émetteur respectif (Tx) et réalise une modulation à préservation de phase (MOD) au moyen des échos radar reçus (RE) ou au moyen d'échos radar traités (RE'), et envoie les signaux modulés (MS) obtenus à partir de celle-ci vers la plate-forme de traitement de signal (SP), dans lequel les échos radar traités (RE') provenant des échos radar reçus (RE) sont obtenus au moyen d'un traitement sans conversion de fréquence contenue en son sein ou au moyen d'un traitement qui comprend une ou plusieurs deuxièmes conversions de fréquence (CON2) dans une seconde bande de fréquences (FB2) et est annulé lors de la conversion de fréquence (CON2) sur deux par une troisième conversion de fréquence associée (CON3) dans la première bande de fréquences (FB1), dans lequel la ou les deuxième(s) conversion(s) de fréquence (CON2) ainsi que la ou les troisième(s) conversion(s) de fréquence (CON3) sont réalisées au moyen de signaux d'oscillateur du même oscillateur (OSR) du récepteur respectif (Rx1, Rx2, Rx3) ;
c) la plate-forme de traitement de signal (SP) démodule les signaux modulés reçus (MS) et réalise une quatrième conversion de fréquence (CON4) des signaux démodulés (DS) dans la bande de fréquences de base (BB) au moyen de signaux d'oscillateur de l'oscillateur (OST) de l'émetteur respectif (Tx), moyennant laquelle des données brutes de RSO (RD) sont obtenues à partir desquelles la plate-forme de traitement de signal (SP) génère et mémorise des données numériques.

17. Système de radar à synthèse d'ouverture selon la revendication 16, **caractérisé en ce que** le système est configuré pour la réalisation d'un procédé selon une des revendications 2 à 15.

18. Récepteur pour la réception d'échos radar, dans lequel le récepteur (Rx1, Rx2, Rx3) est configuré pour fonctionner en tant qu'un récepteur dans un procédé selon une des revendications 1 à 15.

19. Plate-forme de traitement de signal, dans laquelle la plate-forme de traitement de signal (SP) est configurée pour fonctionner en tant qu'une plate-forme de traitement de signal (SP) dans un procédé selon une des revendications 1 à 15.
